# EUROPÄISCHE PATENTSCHRIFT

(11) **EP 1 699 253 B1**
(45) Veröffentlichungstag und Bekanntmachung des Hinweises auf die Patenterteilung: **10.11.2010**
(21) Anmeldenummer: 06004054.0
(22) Anmeldetag: 28.02.2006
(51) Int. Cl.: H04W 36/32

(54) **Verfahren zur Optimierung der Cell-Reselection-Performance in einem Mobilfunknetz nach UMTS-Standard**
Method for optimising cell reselection performance in a mobile UMTS network
Procédé d'optimisation de la performance de resélection de cellule dans un réseau mobile UMTS

(30) Priorität: 01.03.2005 DE 102005009897
(43) Veröffentlichungstag der Anmeldung: 06.09.2006
(73) Patentinhaber: T-Mobile International AG, 53227 Bonn (DE)
(72) Erfinder: Klatt, Axel, 50996 Köln (DE)
(74) Vertreter: Riebling, Peter

(56) Entgegenhaltungen:
- DE-A1- 19 955 838
- GB-A- 2 394 150
- "3rd Generation Partnership Project; Technical Specification Group Radio Access Network; User Equipment (UE) procedures in idle mode and procedures for cell reselection in connected mode" 3GPP TS 25.304 V6.4.0 (2004-12), TECHNICAL SPECIFICATION, 1. Dezember 2004 (2004-12-01), Seiten 1-44, XP002505885

## Beschreibung

Die vorliegende Erfindung betrifft ein Verfahren zur Verbesserung der Cell-Reselection-Performance in einem Mobilfunknetz nach UMTS-Standard.

### Stand der Technik

Stand der Technik ist heute ein in den 3GPP-Spezifikationen für ein Mobilfunknetz nach dem UMTS- oder 3G-Standard ausgeführtes Mobilfunknetz, dass sich ein Teilnehmerendgerät (UE) je nach Zustand der Aktivität in einem so genannten "RRC-State" befindet und unterschiedliche Funktionen zur Mobilität ausführen muss. Diese Funktionen sind zum Beispiel in dem *3rd Generation Partnership Project Agreement* auf der Internetseite *www.3GPP.org* der technischen Spezifikation *3GPP TS 25.304* zu entnehmen.

Beispielsweise wird die Mobilität eines Mobilfunkteilnehmers im sog. CELL_DCH state durch die Ausführung eines netzgesteuerten Handovers zum Beispiel als Hard- oder Softhandover ausgeführt [3GPP TS 25.331]. Hingegen kontrolliert ein sich im sog. "CELL_FACH" oder "CELL_PCH" oder "URA_PCH" oder "ldle mode" befindendes Mobilfunkendgerät (UE) basierend auf den auf dem BCH abgestrahlten Informationen (hier "Cell Reselection"-Parameter und Nachbarschaftsinformationen) selbständig die eigene Mobilität und startet einen Zellwechsel, sobald eine Nachbarzelle eine bessere Qualität als die aktuelle Zelle aufweist [3GPP TS 25.304]. Dieses Verfahren kommt auch bei heute üblichen GSM-/GPRS-Systemen der 2. Mobilfunkgeneration zum Einsatz, wie zum Beispiel in der technischen Spezifikation 3GPP TS 05.08 (UE based cell reselection).

Prinzipiell führt ein in den States "Idle Mode" und RRC Connected Mode States "CELL_FACH", "CELL_PCH" und "URA_PCH" befindliches Mobilfunkendgerät kontinuierlich oder periodisch Messungen der eigenen, sowie einer Reihe von konfigurierten Nachbarzellen durch. Die Bekanntgabe der möglichen Nachbarzellen erfolgt hierbei im sogenannten System Information Block 11 (SIB11) oder System Information Block 12 (SIB12) des BCH wie zum Beispiel in 3GPP TS 25.304 und 3GPP TS 25.331 beschrieben.

Ein Wechsel von der aktuellen Zelle in eine Nachbarzelle in einem System der 3. Generation, wie zum Beispiel UMTS/3G erfolgt in den oben genannten States immer dann, wenn eine benachbarte Zelle funktechnisch besser ist als die aktuell Verwendete.

Auf diese Weise wird sicher gestellt, dass sich ein Mobilfunkendgerät immer in der Zelle eines zellularen Mobilfunknetzes befindet, in der es eine möglichst geringe Sendeleistung benötigt um Kontakt mit der nächstgelegenen Basisstation (NodeB) aufzunehmen und andererseits immer die besten Empfangsbedingungen vorfindet.

Um einen Zellwechsel aufgrund kurzzeitiger Änderungen der Funkfeldbedingungen, dem sogenannten "Fading", und die anschließende Rückkehr in die ursprüngliche Zelle zu vermeiden, verwendet ein UMTS-System im wesentlichen zwei Parameter die auf dem BCH im System Information Block 3 (SIB3) oder System Information Block 4 (SIB4) abgestrahlt werden. Namentlich handelt es sich hierbei um "Treselection" und "Qhyst" [3GPP TS 25.304; hier speziell "Treselectionₛ" und "Qhyst1 ₛ"/"Qhyst2ₛ"].

Um ein zu schnelles Wechseln zwischen Zellen aufgrund sich schnell ändernder Funkbedingungen zu vermeiden, erfolgt ein Wechsel von der ursprünglichen Zelle in die Nachbarzelle immer nur dann, wenn die Nachbarzelle für die Zeit "Treselection" um den Faktor "Qhyst" besser war, als die ursprüngliche Zelle war. Dieses Verhalten eines Mobilfunkendgerätes ist im Detail in der technischen Spezifikation 3GPP TS 25.304 beschrieben.

Der wesentliche Nachteil des Standes der Technik ist, dass die Geschwindigkeit /Schnelligkeit / Performance des Cell-Reselections abhängig vom UE -State ("Idle", "URA_PCH", "CELL_PCH" und "CELL_FACH") unterschiedlichen Anforderungen genügen muss, aber vom Stand der Technik nicht berücksichtigt wird.

Während in den States "Idle", "URA_PCH" und "CELL_PCH" vom Mobilfunkendgerät keine Daten an das Netzwerk übertragen werden können und daher die Zeit die ein UE für einen Zellwechsel benötigt, nicht sehr kritisch ist, sind die Verhältnisse im "CELL_FACH"State wesentlich anders.

Der "CELL_FACH" State dient dazu, kleine Datenmengen, typischerweise bis zu einigen kbyte Größe, zwischen dem Mobilfunkendgerät und dem Mobilfunknetz auszutauschen. Hierzu ist es notwendig, dass das Teilnehmerendgerät immer auf der optimalen Zelle ist, während typischerweise der Zellwechsel in allen anderen States, mit Ausnahme von CELL_DCH, langsamer erfolgen kann.

Im Allgemeinen gesprochen wird also in den States "Idle", "URA_PCH" und "CELL_PCH" eine längere Mittelwertbildung der Nachbarzellenqualität benutzt, als im "CELL-FACH"-State.
Während man also in den States "Idle", "URA_PCH" und "CELL_PCH" zur Vermeidung eines verfrühten Zellwechsels typischerweise längere Zeiten für "Treselection" verwendet, möchte man durch kürzere Zeiten von "Treselection" für UE's in "CELL_FACH" erreichen, dass sich das UE immer möglichst schnell auf der optimalen Zelle befindet um einen Datenaustausch mit dem Netz zuverlässig zu gewährleisten ohne einen Fehlversuch in der Datenübertragung oder zusätzliche Verzögerung zu riskieren.

Der entscheidende Nachteil des Standes der Technik ist aber, das es nur einen Parameter "Treselection" und einen Parameter "Qhyst" gibt, der unabhängig von den UEStates und der Geschwindigkeit mit der sich ein Mobilfunkendgerät fortbewegt gilt.

Erfahrungen aus dem Betrieb der ersten kommerziellen UMTS--Netze zeigen weiterhin, dass es eine starke Abhängigkeit zwischen der Mittelwertbildung basierend auf "Treselection" in den unterschiedlichen UE--States und der Mobilität des Mobilfunkendgerätes gibt.

Während beispielsweise ein sich schnell bewegendes Mobilfunkendgerät im "CELL_FACH" state idealerweise ein relativ kurzes "Treselection" benützen sollte, um den Wechsel zur Nachbarzelle nicht unnötig zu verzögern, würde ein sich langsamer bewegendes oder sogar stationäres Mobilfunkendgerät eher etwas längere Werte für "Treselection" benützen, um nicht unnötig in eine Nachbarzelle zu wechseln, um kurze Zeit später wieder in die ursprüngliche Zelle zurückzukehren, da sich die Funkbedingungen aufgrund des sogenannten "slow-fading" geändert haben.

Prinzipieil haben Mobilfunknetze und Endgeräte nach dem Stand der Technik also den entscheidenden Nachteil, dass es keine geschwindigkeitsabhängige Mittelwertbildung der Nachbarschaftsmessungen gibt, wobei es also nur einen fixen Wert für "Treselection" gibt, welcher unabhängig vom UE-State und der UE -Mobilität Gültigkeit für die Cell-Reselection Entscheidung hat.

Des weiteren berücksichtigt der Stand der Technik nicht, dass die zur Entscheidung des Zellwechsels normalerweise herangezogene Messgröße CPICH Ec/NO zum Rand einer WCDMA-IUMTS-Zelle sehr schnell abfällt.
Ein Mobilfunkendgerät verbleibt also bei stark abfallendem CPICH Ec/NO ggf. zu lange auf der funktechnisch schlechten Zelle und die Kommunikation mit dem Mobilfunknetz ist somit nicht mehr sichergestellt. Im schlimmsten Fall ist Datenverlust die Folge.

Die DE 199 55 838 A1 offenbart ein Verfahren zur Steuerung der Verbindungsübergabe (Handover) in einem Funk-Kommunikationssystem, wobei von einer Teilnehmerstation jeweils ermittelte charakteristische Werte, z.B. Empfangsstärke oder Bitfehlerrate, bezüglich von Übertragungsverhältnissen bei der Signalübertragung in Abwärtsrichtung von zumindest zwei Basisstationen des FunkKommunikationssystems über ein Zeitintervall gemittelt werden. Anhand des Mittelwerts wird dann zumindest eine Basisstation zur Versorgung der Teilnehmerstation mit funktechnischen Ressourcen ausgewählt.

Dem Erfindungsgegenstand liegt deshalb die Aufgabe zugrunde ein Verfahren zur Optimierung der Cell-Reselection-Prozedur nach UMTS-Standard derart weiterzubilden, dass eine individuelle Anpassung aufgrund der Mobilfunkendgerätegeschwindigkeit durchführbar ist.

Die Lösung der Aufgabe ist durch die Merkmale des Oberbegriffs im Hauptanspruch gekennzeichnet.

Hier setzt nun der Gegenstand der vorliegenden Erfindung ein.

Das vorliegende erfindungsgemäße Verfahren beschreibt eine Optimierung der In dem Artikel 3GPP TS 25.304 beschriebenen Cell-Reselection-Prozedur eines Mobilfunkendgerätes (UE).

Im Besonderen ermöglicht das erfindungsgemäße Verfahren eine gezielte Optimierung des Zellwechsels eines sich bewegenden Mobilfunkteilnehmers.
Des Weiteren ermöglicht das erfindungsgemäße Verfahren eine Vermeidung einer Signalisierungslast von sich nicht bewegenden oder sich langsam bewegenden Mobilfunkteilnehmern und damit verbunden eine optimierte Verwendung von Signalisierungs-Ressourcen, während das Cell-Reselection eines sich relativ schnell bewegenden Mobilfunkteilnehmers optimiert werden kann, so dass Verzögerungen in der Datenübertragung und Übertragungsfehler vermieden werden können.

Sich schnell bewegenden Mobilfunkteilnehmern erlaubt das erfindungsgemäße Verfahren einen relativ schnellen Wechsel in eine Nachbarzelle, was besonders für den UE-State "CELL_FACH" von wesentlichem Vorteil ist.

Außerdem trägt das Verfahren der Tatsache Rechnung, dass am Zellrand von WCDMA-/(UMTS-) Zellen die Downlink-Qualität sehr schnell abnimmt (der Messwert CPICH Ec/NO fällt also zum Zellrand sehr stark ab) und vermieden wird, dass sich schnell aus der Zelle bewegende Mobilfunkteilnehmer zu lange in der (schlechten) Ursprungszelle bleiben ohne einen Zellwechsel zu vollziehen.

Die Zeit einer Nichterreichbarkeit eines sich bewegenden Mobilfunkteilnehmers während der Durchführung des Zellwechsels wird im Vergleich zum Stand der Technik erheblich reduziert, da ein unnötiger Zellwechsel von sich langsam bewegenden oder stationären Mobilfunkteilnehmern vermieden werden kann. Somit kann ein sogenannter unerwünschter "ping-pong"-Effekt zwischen den Zellen vermieden werden.

Das zugrunde liegende erfindungsgemäße Verfahren ermöglicht es durch die Einführung einer State- und einer geschwindigkeitsabhängigen Mittelwertbildung aufgrund unterschiedlicher Werte für "Treselection" bzw. deren Skalierung die Cell-Reselection Performance in einem Mobilfunksystem nach UMTS-Standard erheblich zu verbessern und Mobilfunknetzbetreibern die Möglichkeit zu geben, eine individuelle Anpassung der Cell-Reselection aufgrund der Mobilfunkendgeräte-Geschwindigkeit zu ermöglichen.

Mobilfunksysteme nach dem UMTS-Standard können mit dem heutigen Stand der Technik auch derart ausgeführt sein, dass sie von mehreren Frequenzen Gebrauch machen und die Ausbildung der Zellen in kleinen, wie zum Beispiel "Mirco-Cells" und größeren Zellen, wie zum Beispiel "Macro-Cells" ausgeführt wird.

Eine derartige Anordnung wird im allgemeinen als "hierarchische Zell-Struktur" (HCS
- "Hierarchical Cell Structure") in zellularen Mobilfunknetzen bezeichnet. Für den UMTS-Standard ist diese Anordnung in [3GPP TS 25.304] beschrieben.

Typischerweise macht die Verwendung von HCS Gebrauch von der Tatsache, dass sich langsam bewegende oder stationäre Mobilfunkteilnehmer in möglichst kleinen Zellen befinden sollen, wie zum Beispiel Mirco-Cells, während sich bewegende Mobilfunkteilnehmer vorzugsweise in größeren Zellen, wie zum Beispiel Macro-Cells befinden.

Somit wird gewährleistet, dass sich bewegende Mobilfunkteilnehmer nur selten einen Zellwechsel vollziehen. Die genaue Beschreibung dieses Prinzips ist ebenfalls für ein UMTS -System in [3GPP TS 25.304] enthalten.
Zur Unterscheidung, ob sich ein Mobilfunkteilnehmer bewegt, oder stationär ist, verwendet das Prinzip von HCS die Ermittlung der Anzahl der Zellwechsel (Parameter NCR) über eine vorgegebene Zeit (Parameter TCR) wie in der Druckschrift WO 002001043462 beschrieben.

Die beiden Parameter NCR und TCR werden dem Mobilfunkendgerät über den BCH (in SIB3 oder 4) in jeder Zelle mitgeteilt und das Mobilfunkendgerät entscheidet über die Anzahl der Zellwechsel (NCR) im Zeitraum (TCR), ob es sich im sogenannten "low-mobility"- oder "high-mobility"-State befindet.
Wenn es sich im "low-mobility"-State befindet, favorisiert es einen Zellwechsel in kleinere Zellen (Mirco-Cells), während es im "high-mobility"-State größere Zellen (Macro-Cells) favorisiert.

Die Folge dieses Verhaltens ist, dass die Anzahl der Zellwechsel für sich schnell bewegende Mobilfunkendgeräte minimiert wird, wodurch insgesamt die Kapazität des Mobilfunknetzes maximiert wird.

Dieses Verfahren der Evaluierung des "low"- oder "high-mobility"-States durch Erfassen der Anzahl der Zellwechsel ist jedoch nach dem Stand der Technik nur möglich, wenn ein Mobilfunknetz nach UMTS-Standard das Prinzip der Hierarchischen Zell-Strukturen (HCS) verwendet. Ein Einfluss auf die Cell-Reselection Parameter "Treselection" und "Qhyst" ist nach dem Stand der Technik nicht möglich.

Das erfindungsgemäße Verfahren sieht vor, die Cell-Reselection, welche mittels der Parameter "Treselection" und "Qhyst" gesteuert wird, geschwindigkeitsabhängig auszulegen, so dass erreicht werden kann, das sich langsam bewegende oder stationäre Mobilfunkendgeräte einen längeren Wert für "Treselection" benutzen und sich schnell bewegende Mobilfunkendgeräte dementsprechend einen kürzeren Wert von "Treselection" benutzen.

Das gleiche Verfahren ist auch für den Schwellwert "Qhyst" verwendbar. Sich schnell bewegende Mobilfunkendgeräte nutzen einen kleinen Wert von "Qhyst", während langsam bewegende einen größeren Wert verwenden.

Grundlage des erfindungsgemäßen Verfahrens ist die Anwendung der geschwindigkeitsabhängigen Ermittlung der Parameter "Treselection" und "Qhyst" durch die Anwendung des gleichen Verfahrens wie für die Ermittlung des Mobility - States bei Verwendung von hierarchischen Zellstrukturen die mit dem heutigen Stand der Technik nicht möglich ist.

Prinzipiell basiert das erfindungsgemäße Verfahren auf der Erweiterung des für HCS benutzen Verfahrens zur Ermittlung der Geschwindigkeit des Mobilfunkendgerätes für den Fall, dass HCS nicht benutzt wird.
Hierzu schlägt das erfindungsgemäße Verfahren vor, die Parameter NCR zur Ermittlung der Anzahl der Cell-Reselections während der Zeit TCR entsprechend wie für den HCS-Fall zu benutzten und auf den nicht-HCS-Fall zu erweitern. Zur Rückkehr vom "high-Mobility"- zum "low-Mobility"-State des Mobilfunkendgerätes wird ein Parameter ähnlich wie "TCrmaxHyst" wie für den HCS -Fall vorgeschlagen.

Weiterer wesentlicher Bestandteil des erfindungsgemäßen Verfahrens ist die Berechnung der geschwindigkeitsabhängigen Parameter "Treselection" und "Qhyst", die die "Schnelligkeit" der Cell-Reselection je nach Geschwindigkeit des Mobilfunkendgerätes beeinflussen.

Eine mögliche Verbesserung des erfindungsgemäßen Verfahrens vermeidet, dass jeweils neue Parameter für "Treselection" und "Qhyst" auf dem BCH abgestrahlt werden müssen.
Hierzu schlägt eine Variante des erfindungsgemäßen Verfahrens vor, dass ein geschwindigkeitsabhängiger Skalierungsfaktor, wie zum Beispiel der "scaling factor" eingeführt wird, mit dem die bereits existierenden Parameter "Treselection" und "Qhyst", je nach Mobilfunkendgeräte-Geschwindigkeit beeinflusst werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

## Patentansprüche

1. Verfahren zur Optimierung der Cell-Reselection Performance in einem Mobilfunksystem nach dem UMTS- oder 3G-Standard, wobei die Optimierung der Cell-Reselection Performance durch eine Änderung von Cell-Reselection Parametern in Abhängigkeit von der Geschwindigkeit eines Mobilfunkendgeräts erfolgt, wobei für die Anwendung des Verfahrens nicht hierarchische Zell-Strukturen verwendet werden, wobei nach Ermittlung des Geschwindigkeitszustandes des Mobilfunkendgerätes eine Änderung des Cell-Reselection Mittelungswertes, beispielsweise "Treselection", erfolgt, und dieser auf einer geschwindigkeitsabhängigen Skalierung eines bereits vorhandenen geschwindigkeitsunabhängigen Cell-Reselection Mittelungswertes, beispielsweise des Parameters "Treselection", beruht, und zusätzlich eine Änderung des Cell-Reselection Schwellwertes "Qhyst" erfolgt, und dieser auf der Skalierung eines bereits vorhandenen geschwindigkeitsunabhängigen Parameters, beispielsweise "Qhyst", beruht.

2. Verfahren nach Anspruch 1, **dadurch gekennzeichnet, dass** die geschwindigkeitsabhängige Optimierung der Cell-Reselection Performance unter Anwendung eines Prinzips ausgebildet ist, welches im wesentlichen nicht die Verwendung von hierarchischen Zellstrukturen gemäß 3GPP 25.304 aufweist.

3. Verfahren nach Anspruch 1 und 2, **dadurch gekennzeichnet, dass** die geschwindigkeitsabhängige Optimierung der Cell-Reselection Performance mittels Anwendung einer UE basierten Entscheidung durchgeführt wird, wobei sich das Mobilfunkendgerät entweder in einem "low" oder in einem "high-Mobility" State befindet und im wesentlichen die Voraussetzung hierzu nicht die Konfiguration von hierarchischen Zellstrukturen, HCS in einem Mobilfunksystem nach UMTS-Standard aufweist.

4. Verfahren nach Anspruch 1 bis 3, **dadurch gekennzeichnet, dass** eine geschwindigkeitsabhängige Optimierung der Cell-Reselection Performance durchführbar ist und die Ermittlung der Geschwindigkeit eines Mobilfunkendgerätes auf dem Erfassen der Anzahl von Cell Reselections NCR im Zeitintervall TCR stattfindet und die Voraussetzung hierzu nicht die Konfiguration von hierarchischen Zellstrukturen, in einem Mobilfunksystem nach UMTS-Standard aufweist.

5. Verfahren nach Anspruch 1 bis 4, **dadurch gekennzeichnet, dass** eine geschwindigkeitsabhängige Optimierung der Cell-Reselection Performance durchführbar ist und dass nach Ermittlung des Geschwindigkeitszustandes des Mobilfunkendgerätes eine Änderung des Cell-Reselection Mittelungswertes "Treselection" erfolgt, wobei dieser im wesentlichen auf der Abstrahlung eines speziellen geschwindigkeitsabhängigen Parameters "Treselection" beruht, wie zum Beispiel des Parameters "Treselection_fast".

6. Verfahren nach Anspruch 1 bis 5, **dadurch gekennzeichnet, dass** eine geschwindigkeitsabhängige Optimierung der Cell-Reselection Performance durchführbar ist und dass nach Ermittlung des Geschwindigkeitszustandes des Mobilfunkendgerätes eine Änderung des Cell-Reselection Mittelungswertes "Treselection" erfolgt, wobei dieser im wesentlichen nicht auf der Abstrahlung eines speziellen geschwindigkeitsabhängigen Parameters "Treselection" beruht.

7. Verfahren nach Anspruch 1 bis 6, **dadurch gekennzeichnet, dass** eine geschwindigkeitsabhängige Optimierung der Cell-Reselection Performance durchführbar ist und dass nach Ermittlung des Geschwindigkeitszustandes des Mobilfunkendgerätes eine Änderung des Cell-Reselection Schellwertes "Qhyst" erfolgt, wobei dieser im wesentlichen auf der Abstrahlung eines speziellen geschwindigkeitsabhängigen Parameters "Qhyst" beruht, wie zum Beispiel des Parameters "Qhyst_fast".

8. Verfahren nach Anspruch 1 bis 7, **dadurch gekennzeichnet, dass** eine geschwindigkeitsabhängige Optimierung der Cell-Reselection Performance durchführbar ist und nach Ermittlung des Geschwindigkeitszustandes des Mobilfunkendgerätes eine Änderung des Cell-Reselection Schwellwertes "Qhyst" erfolgt, wobei dieser im wesentlichen nicht auf der Abstrahlung eines speziellen geschwindigkeitsabhängigen Parameters "Qhyst" beruht.

9. Verfahren nach Anspruch 1 bis 8, **dadurch gekennzeichnet, dass** eine geschwindigkeitsabhängige Optimierung der Cell-Reselection Performance nach einem der vorgenannten Verfahren lediglich für den Mobilfunkendgeräte-State "Idle" anwendbar ist.

10. Verfahren nach Anspruch 1 bis 9, **dadurch gekennzeichnet, dass** eine geschwindigkeitsabhängige Optimierung der Cell-Reselection Performance nach einem der vorgenannten Verfahren lediglich für den Mobilfunkendgeräte-State "URA_PCH" anwendbar ist.

11. Verfahren nach Anspruch 1 bis 10, **dadurch gekennzeichnet, dass** eine geschwindigkeitsabhängige Optimierung der Cell-Reselection Performance nach einem der vorgenannten Verfahren lediglich für den Mobilfunkendgeräte-State "CELL_PCH" anwendbar ist.

12. Verfahren nach Anspruch 1 bis 11, **dadurch gekennzeichnet, dass** eine geschwindigkeitsabhängige Optimierung der Cell-Reselection Performance nach einem der vorgenannten Verfahren lediglich für den Mobilfunkendgeräte-State "CELL_FACH" anwendbar ist.

13. Verfahren nach Anspruch 1 bis 12, **dadurch gekennzeichnet, dass** eine geschwindigkeitsabhängige Optimierung der Cell-Reselection Performance nach einem der vorgenannten Verfahren für eine Kombination der in Anspruch 9 - 12 genannten Mobilfunkendgeräte States anwendbar ist.

## Claims

1. Method for optimising cell reselection performance in a mobile telephone system according to the UMTS standard or 3G standard, wherein optimisation of cell reselection performance is effected by a change of cell reselection parameters as a function of the speed of a mobile telephone terminal, wherein for application of the method, non-hierarchical cell structures are used, wherein after determining the speed status of the mobile telephone terminal, a change in cell reselection averaging value, for example "Treselection", is effected, and this is based on a speed-dependent scaling of an already existing speed-independent cell reselection averaging value, for example of the parameter "Treselection", and in addition a change in cell reselection threshold value "Qhyst" is effected, and this is based on the scaling of an already existing speed-independent parameter, for example "Qhyst".

2. Method according to claim 1, **characterised in that** speed-dependent optimisation of cell reselection performance is formed using a principle which essentially does not have the use of hierarchical cell structures according to 3GPP 25.304.

3. Method according to claim 1 and 2, **characterised in that** speed-dependent optimisation of cell reselection performance is carried out by means of using a UE-based decision, wherein the mobile telephone terminal is either in a "low" or in a "high-mobility" state and essentially the precondition for this does not have the configuration of hierarchical cell structures, HCS in a mobile telephone system according to UMTS standard.

4. Method according to claim 1 to 3, **characterised in that** speed-dependent optimisation of cell reselection performance can be implemented and determination of the speed of a mobile telephone terminal takes place by recording the number of cell reselections NCR in the time interval TCR and the precondition for this does not have the configuration of hierarchical cell structures in a mobile telephone system according to UMTS standard.

5. Method according to claim 1 to 4, **characterised in that** speed-dependent optimisation of cell reselection performance can be implemented and that after determining the speed status of the mobile telephone terminal, a change in cell reselection averaging value "Treselection" is effected, wherein the latter is based essentially on the transmission of a special speed-dependent parameter "Treselection", such as for example of the parameter "Treselection_fast".

6. Method according to claim 1 to 5, **characterised in that** speed-dependent optimisation of cell reselection performance can be implemented and that after determining the speed status of the mobile telephone terminal, a change in cell reselection averaging value "Treselection" is effected, wherein the latter is essentially not based on the transmission of a special speed-dependent parameter "Treselection".

7. Method according to claim 1 to 6, **characterised in that** speed-dependent optimisation of cell reselection performance can be implemented and that after determining the speed status of the mobile telephone terminal, a change in cell reselection threshold value "Qhyst" is effected, wherein the latter is based essentially on the transmission of a special speed-dependent parameter "Qhyst", such as for example of the parameter "Qhyst_fast".

8. Method according to claim 1 to 7, **characterised in that** speed-dependent optimisation of cell reselection performance can be implemented and after determining the speed status of the mobile telephone terminal, a change in cell reselection threshold value "Qhyst" is effected, wherein the latter is essentially not based on the transmission of a special speed-dependent parameter "Qhyst".

9. Method according to claim 1 to 8, **characterised in that** speed-dependent optimisation of cell reselection performance according to one of the previously mentioned methods can be applied only for the mobile telephone terminal state "idle".

10. Method according to claim 1 to 9, **characterised in that** speed-dependent optimisation of cell reselection performance according to one of the previously mentioned methods can be applied only for the mobile telephone terminal state "URA_PCH".

11. Method according to claim 1 to 10, **characterised in that** speed-dependent optimisation of cell reselection performance according to one of the previously mentioned methods can be applied only for the mobile telephone terminal state "CELL_PCH".

12. Method according to claim 1 to 11, **characterised in that** speed-dependent optimisation of cell reselection performance according to one of the previously mentioned methods can be applied only for the mobile telephone terminal state "CELL_FACH".

13. Method according to claim 1 to 12, **characterised in that** speed-dependent optimisation of cell reselection performance according to one of the previously mentioned methods can be applied for a combination of mobile telephone terminal states mentioned in claim 9 - 12.

## Revendications

1. Procédé pour optimiser la performance de resélection de cellule dans un système de téléphonie mobile selon la norme UMTS ou 3G, étant précisé que l'optimisation de la performance de resélection de cellule se fait grâce à une modification de paramètres de resélection de cellule en fonction de la vitesse d'un terminal de téléphonie mobile, que des structures de cellules non hiérarchiques sont utilisées pour l'application du procédé, qu'après détermination de l'état de vitesse du terminal de téléphonie mobile une modification de la valeur de moyenne de resélection de cellule, par exemple "Tresélection", a lieu, et cette valeur est basée sur une valeur d'échelle, qui est fonction de la vitesse, d'une valeur de moyenne de resélection de cellule indépendante de la vitesse qui existe déjà, par exemple du paramètre "Tresélection", et qu'en supplément a lieu une modification de la valeur seuil de resélection de cellule "Qhyst", et que celle-ci est basée sur la valeur d'échelle d'un paramètre indépendant de la vitesse qui existe déjà, par exemple "Qhyst".

2. Procédé selon la revendication 1, **caractérisé en ce que** l'optimisation, dépendante de la vitesse, de la performance de resélection de cellule est conçue avec l'application d'un principe qui ne comporte pratiquement pas l'utilisation de structures de cellules hiérarchiques selon 3GPP 25.304.

3. Procédé selon les revendications 1 et 2, **caractérisé en ce que** l'optimisation, dépendante de la vitesse, de la performance de resélection de cellule est réalisée à l'aide de l'application d'une décision basée sur le terminal d'utilisateur, étant précisé que le terminal de téléphonie mobile se trouve dans un état de "faible mobilité" ou de "haute mobilité", et que la condition préalable pour cela ne comporte partiquement pas la configuration de structures de cellules hiérarchiques, HCS, dans un système de téléphonie mobile selon la norme UMTS.

4. Procédé selon les revendications 1 à 3, **caractérisé en ce qu'**une optimisation de la performance de resélection de cellule en fonction de la vitesse est réalisable, et la détermination de la vitesse d'un terminal de téléphonie mobile a lieu grâce à la détection du nombre de resélections de cellule NCR pendant le laps de temps TCR, et la condition préalable pour cela ne comporte pas la configuration de structures de cellules hiérarchiques, dans un système de téléphonie mobile selon la norme UMTS.

5. Procédé selon la revendication 1 ou 4, **caractérisé en ce qu'**une optimisation de la performance de resélection de cellule en fonction de la vitesse est réalisable, et **en ce qu'**après détermination de l'état de vitesse du terminal de téléphonie mobile, une modification de la valeur de moyenne de resélection de cellule "Tresélection" a lieu, étant précisé que cette valeur est basée globalement sur l'émission d'un paramètre spécial "Treselection" dépendant de la vitesse, comme par exemple le paramètre "Treselection_fast".

6. Procédé selon les revendications 1 à 5, **caractérisé en ce qu'**une optimisation de la performance de resélection de cellule en fonction de la vitesse est réalisable, et **en ce qu'**après détermination de l'état de vitesse du terminal de téléphonie mobile, une modification de la valeur de moyenne de resélection de cellule "Tresélection" a lieu, étant précisé que cette valeur n'est pratiquement pas basée sur l'émission d'un paramètre spécial "Treselection" dépendant de la vitesse.

7. Procédé selon les revendications 1 à 6, **caractérisé en ce qu'**une optimisation de la performance de resélection de cellule en fonction de la vitesse est réalisable, et **en ce qu'**après détermination de l'état de vitesse du terminal de téléphonie mobile, une modification de la valeur seuil de resélection de cellule "Qhyst" a lieu, étant précisé que cette valeur est basée globalement sur l'émission d'un paramètre spécial "Qhyst" dépendant de la vitesse, comme par exemple le paramètre "Qhyst_fast".

8. Procédé selon les revendications 1 à 7, **caractérisé en ce qu'**une optimisation de la performance de resélection de cellule en fonction de la vitesse est réalisable, et **en ce qu'**après détermination de l'état de vitesse du terminal de téléphonie mobile, une modification de la valeur seuil de resélection de cellule "Qhyst" a lieu, étant précisé que cette valeur n'est pratiquement pas basée sur l'émission d'un paramètre spécial "Qhyst" dépendant de la vitesse.

9. Procédé selon les revendications 1 à 8, **caractérisé en ce qu'**une optimisation de la performance de resélection de cellule en fonction de la vitesse selon l'un des procédés mentionnés précédemment est applicable seulement pour l'état de terminal de téléphonie mobile "Idle" (libre).

10. Procédé selon les revendications 1 à 9, **caractérisé en ce qu'**une optimisation de la performance de resélection de cellule en fonction de la vitesse selon l'un des procédés mentionnés précédemment est applicable seulement pour l'état de terminal de téléphonie mobile "URA_PCH".

11. Procédé selon les revendications 1 à 10, **caractérisé en ce qu'**une optimisation de la performance de resélection de cellule en fonction de la vitesse selon l'un des procédés mentionnés précédemment est applicable seulement pour l'état de terminal de téléphonie mobile "CELL_PCH".

12. Procédé selon les revendications 1 à 11, **caractérisé en ce qu'**une optimisation de la performance de resélection de cellule en fonction de la vitesse selon l'un des procédés mentionnés précédemment est applicable seulement pour l'état de terminal de téléphonie mobile "CELL_FACH".

13. Procédé selon les revendications 1 à 12, **caractérisé en ce qu'**une optimisation de la performance de resélection de cellule en fonction de la vitesse selon l'un des procédés mentionnés précédemment est applicable pour une combinaison des états de terminal de téléphonie mobile mentionnés dans les revendications 9-12.
